# EUROPEAN PATENT SPECIFICATION

(11) **EP 2 272 725 B1**
(45) Date of publication and mention of the grant of the patent: **19.06.2013**
(21) Application number: 10168687.1
(22) Date of filing: 07.07.2010
(51) Int. Cl.: B60R 21/213

(54) **Improvements in and relating to airbag wraps**
Verbesserungen an und in Zusammenhang mit Airbag-Hüllen
Améliorations directes et indirectes des enveloppes d'airbags

(30) Priority: 07.07.2009 GB 0911677
(43) Date of publication of application: 12.01.2011
(73) Proprietor: Nissan Motor Manufacturing (UK) Ltd., Bedford Bedfordshire MK43 0DB (GB)
(72) Inventor: Mitchell, Simon, Bedford, Bedfordshire MK43 0DB (GB); Balderson, Neil, Bedford, Bedfordshire MK43 0DB (GB)

(56) References cited:
- EP-A1- 2 149 480
- WO-A1-97/34782
- DE-A1-102007 060 282

## Description

### Field of the invention.

The invention relates to airbag wraps and, particularly, but not exclusively, to releasable securing means for airbag wraps for vehicle airbags, wherein the releasable securing means are arranged to release at least part of the wrap during airbag deployment. Aspects of the invention relate to an apparatus, to an airbag system, to a method and to a vehicle.

### Background of the invention.

Airbags are now commonplace in passenger vehicles. They are used to restrain occupants typically within an occupant compartment of the vehicle in the event of an accident. Airbags are available in a variety of different configurations, each optimised for a specific location within the vehicle or a specific vehicle event. One such type of airbag is known as the curtain airbag.

Curtain airbags are typically mounted inside the vehicle, adjacent to the roof, and are typically provided in pairs so as to provide coverage along both the left and right side of the vehicle. They are intended to provide an energy absorbing layer between the side windows of a vehicle and its occupants in the event of a side impact or rollover accident. The purpose of the curtain airbag is to restrain the occupants in the event of high lateral acceleration and to provide an energy absorbing layer to manager the forces sustained by the vehicle occupants. To that end, curtain airbags and airbags in general are also known as inflatable restraints.

The curtain airbag typically covers the majority of the glass area along the side of the vehicle so as to offer protection to both the head and thorax of the occupants on the affected side of the vehicle. The timing, trajectory and deployment kinematics of the deploying airbag are critical to the correct performance of the airbag. If the curtain airbag is obstructed during deployment it can result in uncontrolled or incomplete deployment. If the curtain airbag does not deploy fully in the time required there is a risk that the restraint performance of the curtain airbag will be compromised. To minimise the risk of the curtain airbag being obstructed during deployment it is common practice to employ additional components known as deployment aids.

The use of deployment aids in curtain airbag assemblies are well known in the art. Deployment aids typically take the form of rigid ramps or reaction surfaces located adjacent to the stowed airbag and arranged so as to guide or deflect a deploying airbag towards a desired deployment trajectory.

In some circumstances, the curtain airbag may be protected by a wrap or sock. Wraps and socks typically take the form of a sheet of flexible material wrapped around at least part of the stowed airbag. Wraps and socks are well known in the art as a means of providing protection to the stowed airbag both during transit and from abrasion from adjacent vehicle components when the airbag is installed into the vehicle.

Wraps or socks may cover either a portion or the entire length of the folded curtain airbag. To prevent excessive variation in deployment characteristics or trapping of the wrap by the adjacent vehicle components, the wrap is wrapped tightly around the curtain airbag. Wrapping the curtain airbag tightly with the wrap also serves to keep the tightly folded curtain airbag correctly folded during the lifetime of the vehicle. Wrapping the airbag tightly with the wrap or sock however, makes visual inspection of the folded airbag at the vehicle assembly line extremely difficult. The wrap may hide a twist in the folded airbag which may adversely affect airbag performance if assembled to the vehicle in this condition.

In order for the curtain airbag to deploy correctly, the wrap or sock is sacrificial and must release the deploying airbag repeatably and reliably. During deployment, the airbag inflates and loads against the wrap. The wrap is therefore typically provided with a locally weakened zone arranged to release the airbag at a predetermined load.

Producing a weakened zone in the wrap requires great care to ensure that the wrap releases the airbag correctly. Known methods of creating a weakened zone in a woven textile wrap are sacrificial sewn seams and frangible fasteners such as clips or tape. Frangible fasteners are also used in conjunction with fibre-reinforced paper wraps.

Due to the critical nature of the curtain airbag deployment characteristics, wraps and socks are rarely relied upon to provide any further functionality over protection of the airbag when stowed.

However, one such example has been disclosed in expending application GB 0813894.3 entitled "Improvements in curtain airbags" and corresponding to EP 2149480 A which is prior art according to article 54(3) EPC. This discloses a flexible deployment aid comprising a sheet of flexible material with a first and second retaining means. The first retaining means is configured to secure the sheet to part of the vehicle between the vehicle body and the airbag. The second retaining means is configured to releasably attach the sheet to the vehicle and to release said sheet during deployment of the airbag. The flexible deployment aid is released during airbag deployment via a friction-fit or frangible fastener calibrated to release or yield above a predetermined load. The release of the sheet is extremely critical and must be repeatable to ensure reliable curtain airbag deployment characteristics.

Unfortunately, these frangible fasteners are relatively expensive and care must be taken not to inadvertently use a frangible fastener where a non-frangible fastener should be used and vice-versa. In addition, these methods all rely on additional parts or assembly operations which may be either time consuming or costly.

It is further known to use weakened regions in airbag covers such as socks or wraps, which will rip open when the airbag deploys. For example, DE102007 060282 A1 and WO 97/34782 A1 both disclose locally weakened regions that aid airbag deployment.

It is against this background that the present invention has been conceived. The present invention seeks to provide an apparatus for releasing a wrap or flexible deployment aid from around an airbag during airbag deployment that is both reliable and low cost. The present invention also seeks to provide a method for assembling such a wrap or flexible deployment aid to a vehicle. Embodiments of the present invention may also permit a vehicle manufacturer to benefit from using common parts, such as fasteners, across different vehicle platforms without compromising performance. This approach greatly improves the quality and efficiency of the vehicle assembly process.

### Summary of the invention.

According to an aspect of the present invention there is provided an apparatus for facilitating deployment of a vehicle airbag, the apparatus comprising a sheet of flexible material arranged, in use, to be secured to the vehicle by means of at least one fastener so as to at least partially surround the airbag, wherein the sheet comprises a locally weakened region and a main aperture, said main aperture is adapted to co-operate with at least one fastener for securing the sheet to a deployment ramp, in use, characterised in that the main aperture is located at least partly within the locally weakened region and wherein the locally weakened region is arranged to tear around the fastener for securing the sheet to a deployment ramp thereby to release at least part of the sheet from the vehicle upon deployment of the airbag.

The flexible sheet of material of the present invention is arranged to function as a wrap or flexible deployment aid for an airbag. The locally weakened region of the present invention provides the wrap or flexible deployment aid with a sacrificial region or tear guide, negating the need for a special frangible fastener whilst still ensuring robust and reliable deployment characteristics.

The present invention allows for the use of standard non-frangible fasteners such as: screws, tangs, posts, hooks, rivets, 'scrivets', fir-tree or C-clips or the like, allowing for greater commonality of parts within the vehicle and mitigating the potential for misassembly.

According to an example of the present invention the locally weakened region comprises a plurality of perforations formed through the sheet and arranged to at least partly surround the main aperture. In an alternative example, the locally weakened region comprises an area of reduced material thickness of the sheet and arranged to at least partly surround the main aperture. In another example, the locally weakened region is formed by chemically etching or eroding the surface of the sheet in the vicinity of the main aperture.

Advantageously, perforating the sheet that forms the wrap or flexible deployment aid to produce a locally weakened region can be performed efficiently during the same manufacturing process used to cut the sheet to size and punch out the main hole and the securing holes. Alternatively, use of a sheet with locally reduced material thickness or reduced thread-count in the case of woven wraps may also be used to reliably achieve a locally weakened region or zone in a cost effective manner.

According to an example, the fastener comprises an elongate shaft and a head, wherein the elongate shaft is arranged for insertion into the main aperture and said shaft is terminated at one end by the head which is larger in cross-section than the shaft and is arranged to secure at least a portion of the sheet in use.

According to an example, the shaft of the fastener further comprises at least one barb arranged to secure the fastener in use. In an alternative example, the shaft of the fastener is at least partly threaded and arranged to cooperate with a threaded aperture in the vehicle or the airbag so as to secure the fastener thereto use. In a further example, the shaft of the fastener is configured to form a bayonet-type fastener arranged to cooperate with a correspondingly formed aperture in the vehicle or the airbag so as to secure the fastener thereto use.

Advantageously, such fasteners are economical and require little effort for the assembly operator to secure the sheet around the airbag. Additionally, such fasteners are commonly used in vehicle manufacture, so reducing the need for fasteners that are specific to the wrap or flexible deployment aid. Sharing common parts, such as fasteners, within the vehicle is highly desirable to increase purchasing volumes, reducing the piece part cost. Sharing common parts between vehicles and vehicle components also serves to reduce the likelihood of accidental misassembly of the wrong part to the vehicle as it reduces the variation of parts on the side of the vehicle assembly line.

According to an example, the fastener is arranged to remain secured and intact during deployment of the airbag and subsequent release of the sheet.

Advantageously, the present invention provides a flexible deployment aid or wrap that reliably releases the airbag during deployment, without the potential for loose fragments of fastener entering the occupant compartment of the vehicle.

According to an example, the perforations are arranged in a locus prescribed by the perimeter of the part of the head in contact with the sheet and the part of the head in contact with the sheet is arranged to concentrate load from the airbag into the area of the sheet between the perforations during airbag deployment to initiate and manage the tear of the sheet.

Locally weakening the wrap around the area of the fastener in contact with the sheet serves to further concentrate stress into the locally weakened region by the head of the fastener during airbag deployment. This concentration of stress in the material of the sheet around the perimeter of the head greatly reduces the time needed for the sheet to tear. Advantageously, this ensures completion of the tear to ensure optimal airbag release characteristics.

According to another aspect of the present invention there is provided an airbag assembly comprising an apparatus according to one or more of the preceding paragraphs.

According to still another aspect of the present invention there is provided a vehicle airbag deployment guide such as a ramp or reaction surface comprising an apparatus according to one or more of the preceding paragraphs.

According to a further aspect of the present invention there is provided a vehicle comprising an apparatus according to one or more of the preceding paragraphs.

In still a further aspect of the present invention there is provided a method of assembling a deployment aid for a vehicle-mounted curtain airbag to the vehicle, the method comprising: attaching a sheet of flexible material to a vehicle body adjacent to the vehicle roof via a first retainer; attaching the curtain airbag assembly to the vehicle body adjacent to the vehicle roof; wrapping the sheet of flexible material around at least part of the curtain airbag and; securing the sheet of flexible material around the curtain airbag to the vehicle body via a second retainer in co-operation with a main aperture located at least partly in a locally weakened region in the sheet of flexible material.

Only after the airbag has been correctly mounted to the vehicle is the sheet of flexible material wrapped around the curtain airbag and secured to the vehicle via a standard, non-frangible second retainer. This allows the assembly operator to examine the airbag prior to assembling it to the vehicle, allowing him or her to check for twists and potentially correct them before securing the airbag to the vehicle. The provision of a locally weakened region around the main aperture arranged to co-operate with the second retainer allows for the use of common fasteners to secure the sheet to the vehicle or the airbag reducing parts complexity and risk of inadvertent use of improper fasteners.

It will also be appreciated by one skilled in the art, that the apparatus of the present invention may be suitable for use in other vehicle-based applications.

It will be appreciated by one skilled in the art, that preferred and/or optional features relating to the present invention may be used either alone or in appropriate combination.

### Brief Description of the Drawings

The present invention will now be described, by way of example only, with reference to the accompanying drawings in which:
Figures 1 to 4 are views of a know flexible deployment aid as described in co-pending application GB 0813894.3 entitled "Improvements in curtain airbags" over which the present invention is an improvement;
Figure 1a is a plan view of the known flexible deployment aid and Figure 1b shows the flexible deployment aid in the folded condition;
Figures 2a through 2d are sectional views of the known flexible deployment aid and a known curtain airbag assembly, in the order in which they are installed into a vehicle;
Figure 3 shows a more detailed exploded perspective view of a known curtain airbag being assembled to a vehicle using the known flexible deployment aid;
Figure 4 shows the known flexible deployment aid assembled around a curtain airbag before adjacent trim pieces, such as a headlining and pillar trim, are fitted to the vehicle.
Figure 5 shows a plan view of an example of the apparatus of the present invention incorporated into the flexible deployment aid of Figures 1 to 4;
Figure 6a shows sectional a view through the assembled curtain airbag and flexible deployment aid shown in Figure 2 after deployment and Figure 6b shows a sectional view through a deployed curtain airbag and flexible deployment aid incorporating the apparatus of the present invention after deployment.
Figures 7a through 7c show detailed views of the apparatus of the present invention after deployment of the curtain airbag; and
Figures 8a through 8c show alternative examples of the apparatus of the present invention.

While the examples given for suitable applications for the present invention relate to protective wraps or deployment guides for curtain airbags, it will be appreciated by one skilled in the art that there are potentially other uses for the present invention within passenger vehicles.

Curtain airbags are often supplied to the vehicle assembly line wrapped in a protective covering known as a sock or wrap. The wrap protects the folded curtain airbag during transit and after it has been assembled to the vehicle. It is also possible to produce a wrap that is fitted to the vehicle rather than the curtain airbag itself. In some cases the wrap may be used to act as a flexible deployment aid arranged to guide the trajectory of a curtain airbag during and protect it deployment. Such an aid is described in co-pending application GB 0813894.3 entitled "Improvements in curtain airbags". The present invention was conceived to improve upon the flexible deployment aid described in that co-pending application.

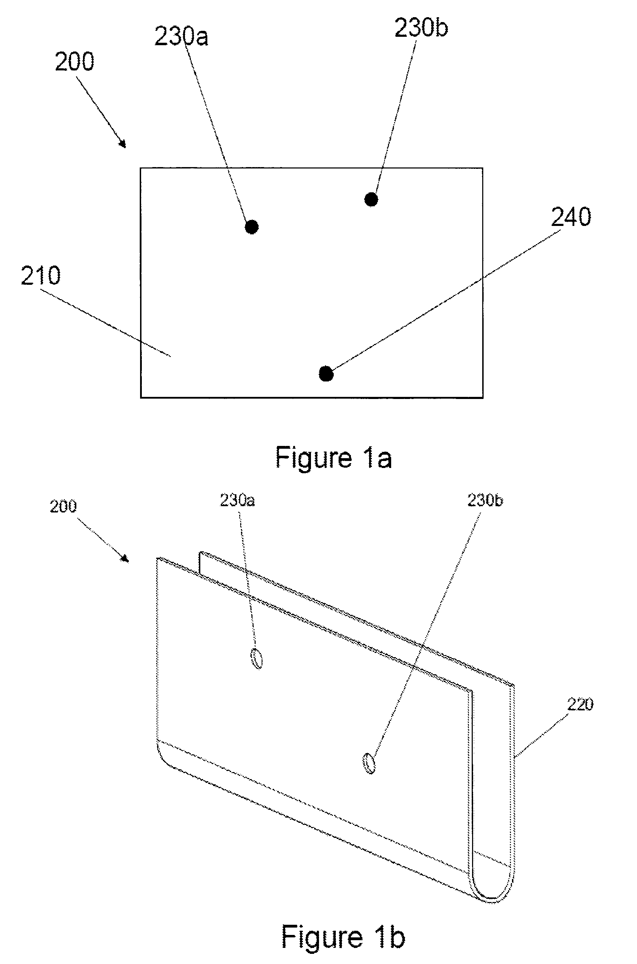

Figure 1 shows two views of a body-mounted flexible deployment aid indicated generally at 200. Figure 1 a shows a plan view of the flexible deployment aid 200 which is formed from a sheet 210 of resilient fabric such as that used to form the airbag itself, typically a woven polyester or nylon textile. The size and shape of the flexible deployment aid 200 is dictated by the size and position of the curtain airbag assembly relative to the vehicle roof frame and associated potential obstacles such as a vehicle headlining and pillar trims.

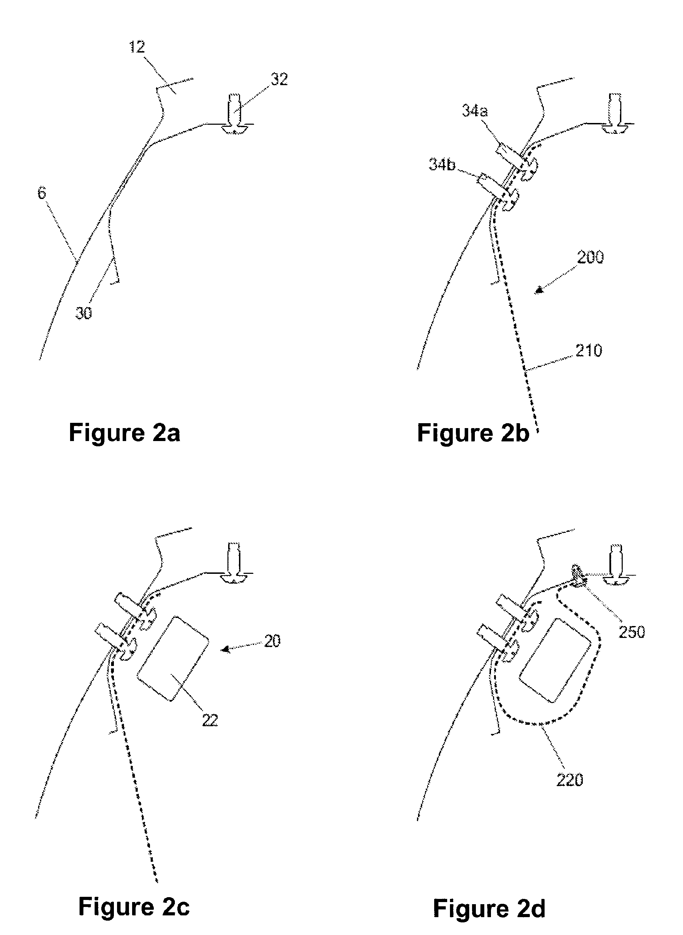

Figure 1 a shows the location of three holes in the sheet 210, there are two holes to provide a first retaining means in the form of upper and lower first fixation-holes (230a and 230b) respectively. The first fixation-holes are positioned to align with the fixation bolts 34a and 34b of a roof-mounted deployment ramp 30 (shown in Figure 2). In one example (not shown), the flexible deployment aid 200 is supplied to the vehicle assembly line as a pre-assembled unit to the roof-mounted deployment ramp 30. In this way, the deployment ramp 30 and flexible deployment aid 200 are supplied together as a sub-assembly. In this case, the sheet 210 is held to the ramp 30 via the fixation bolts 34a, 34b which pass through the upper and lower first fixation-holes 230a and 230b and through the corresponding holes in the ramp 30. The fixation bolts 34a, 34b are held captive to the roof mounted deployment ramp 30 by fibre or star washers (not shown).

Also shown in Figure 1a is a second fixation-hole 240 arranged to provide a second retaining means and is used to hold the flexible deployment aid 200 around the folded curtain airbag 220 once it has been mounted to the vehicle.

Figure 1b shows a representation of the flexible deployment aid 200 with the sheet in the folded or wrapped condition 220. The two fixation-holes 230a and 230b are clearly visible on the side of the folded sheet 220 that is to be fitted against the roof-mounted deployment ramp 30. The side of the folded sheet 220 with the second fixation-hole 240 is wrapped around the folded curtain airbag 22 and typically lies between the curtain airbag and the vehicle headlining.

Figures 2a through 2d show the assembly procedure in four steps for fitting deployment ramp 30, curtain airbag assembly 20 and flexible deployment aid 200 to the vehicle roof frame or cant rail 12. In this example, the sheet 210 is assembled to the deployment ramp 30 in the vehicle rather than being delivered pre-assembled as previously described.

Figure 2 shows a section through a vehicle 'C' pillar 6 arranged to support the vehicle roof frame or cant rail 12. Shown at the top of the 'C' pillar 6 is the cant rail 12 forming part of the roof frame. The cant rail 12 provides a suitable mounting location for the deployment ramp 30 and curtain airbag assembly 20.

The first step in this process is shown in Figure 2a. The deployment ramp 30 is held in position by the assembly operator and a location bolt 32 is used to secure the top of the deployment ramp 30 to the cant rail 12.

The second step in the assembly process is shown in Figure 2b. The assembly operator places the sheet 210 of the flexible deployment aid 200 against the deployment ramp 30 and inserts the final two fixation bolts for the ramp 30 shown as first fixation bolts 34a and 34b. The fixation bolts 34a and 34b pass through the holes 230a and 230b in the sheet 210 and through the ramp 30 and are secured into threaded receivers such as weld-nuts (not shown) in the cant rail 12. In this way the first fixation bolts 34a and 34b provide the first fixations for the flexible deployment aid 200. The sheet 210 then hangs down from the first fixation bolts 34a and 34b and lies against the deployment ramp 30.

The third step in the assembly process is shown in Figure 2c. The assembly operator lifts the curtain airbag assembly 20 into position against the cant rail 12 and the ramp 30. As discussed previously, there may be multiple ramps employed along each side of the vehicle to guide the deployment characteristics of a curtain airbag. The number and position of the ramps are dictated by the design of both the vehicle and curtain airbag. Once the curtain airbag 20 is correctly positioned it is secured against the roof frame with multiple fasteners in the form of threaded fasteners and/or hooks or clips.

The fourth step in the assembly process is shown in Figure 2d. Once the curtain airbag assembly 20 is correctly installed within the vehicle the assembly operator folds or wraps the sheet 210 over the folded airbag 22. The folded or wrapped sheet of the flexible deployment aid 200 is shown generally at 220. The folded sheet 220 is held in place with another fastener. In the example shown the sheet 220 is held in place using a releasable fastener in the form of an expanding friction clip 250.

With these four assembly steps completed the assembly operator may then fit the headlining and associated pillar trim parts to the vehicle. These associated parts cover the airbag assembly, ramp and the flexible deployment aid when fitted, obscuring them all from the view of the vehicle occupants.

During deployment, the curtain airbag expands as it inflates, applying pressure to the flexible deployment aid 200. The folded sheet 220 pulls against the releasable expanding friction clip 250 which will either release from the vehicle body or pull through the second fixation-hole 240 in the sheet 220. The flexible deployment aid 200 works by folding open over the top of a potential obstacle for the deploying curtain airbag and providing a smooth surface for the curtain airbag to deploy over.

It will be appreciated by one skilled in the art, that such a flexible deployment aid 200, lends itself to be used alone or in conjunction with other known airbag deployment guides such as ramps and reaction surfaces. Similarly, this flexible deployment aid 200 may also be used individually or in combination with other flexible deployment aids to guide a deploying airbag between obstacles. If used in pairs or multiples around a curtain airbag assembly 20 care must be taken to minimise friction between the curtain airbag 20 and the flexible deployment aid 200. Figure 2d shows the flexible deployment aid 200 wrapped relatively loosely around the curtain airbag assembly 200 so as not to present a potential obstacle to the deploying airbag itself. The airbag must be given an opportunity to start to inflate and expand before applying any significant load to the folded sheet 220, otherwise the flexible deployment aid 200 will tend to adversely affect the deployment characteristics of the curtain airbag.

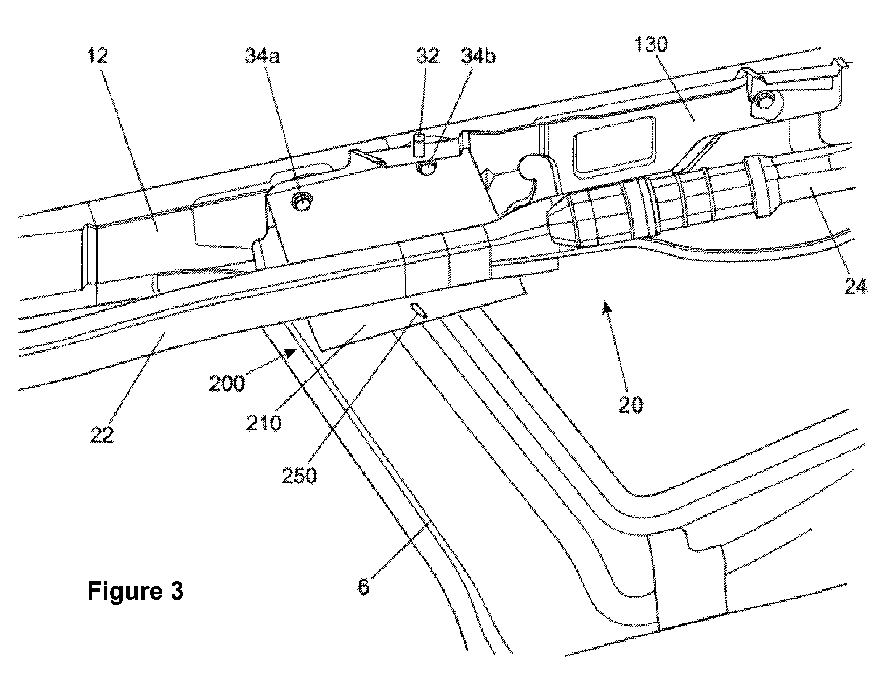

Figure 3 shows the third assembly process as shown in Figure 2c in greater detail. It may be seen from Figure 3 that the expanding friction clip 250 is supplied pre-assembled to the flexible deployment aid 200 by being inserted through the second fixation-hole 240 of the sheet 210. The pre-assembly of the relevant fasteners to the flexible deployment aid 200 greatly reduces assembly time and the effort required by the assembly operator to perform the operation.

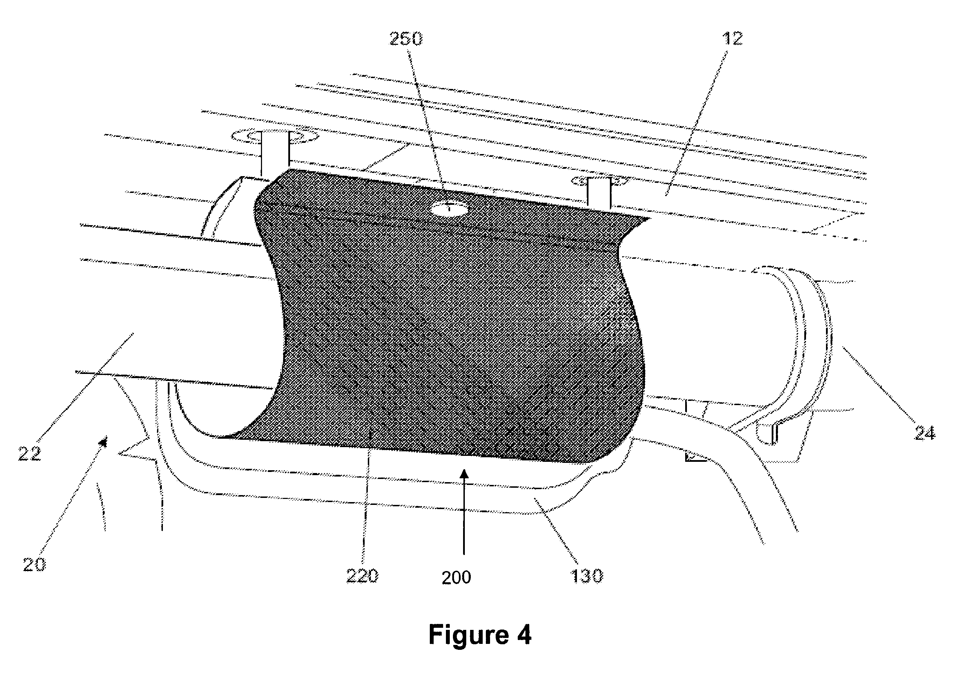

In the example shown in Figure 3, the deployment ramp is combined with a feature to support a vehicle sunroof module. This combined ramp and support is labelled 130. The perspective view of the curtain airbag assembly 20 with the inflator 24 and folded airbag 22 clearly shows that the curtain airbag is in the process of being aligned with the mounting holes in the cant rail 12 above the 'C' pillar 6. As previously described, this is the penultimate step of the assembly procedure, before the assembly operator folds the flexible deployment aid 200 around the curtain airbag 200 and secures it in place with the expanding friction clip 250 which is shown in more detail in Figure 4.

Figure 4 shows the curtain airbag assembly 20, ramp 130, flexible deployment aid 200 and inflator 24 fitted to the cant rail 24 beneath the vehicle roof 14. The folded sheet 220 of the flexible deployment aid 200 is held in place around the folded curtain airbag 22 by means of the expanding friction clip 250.

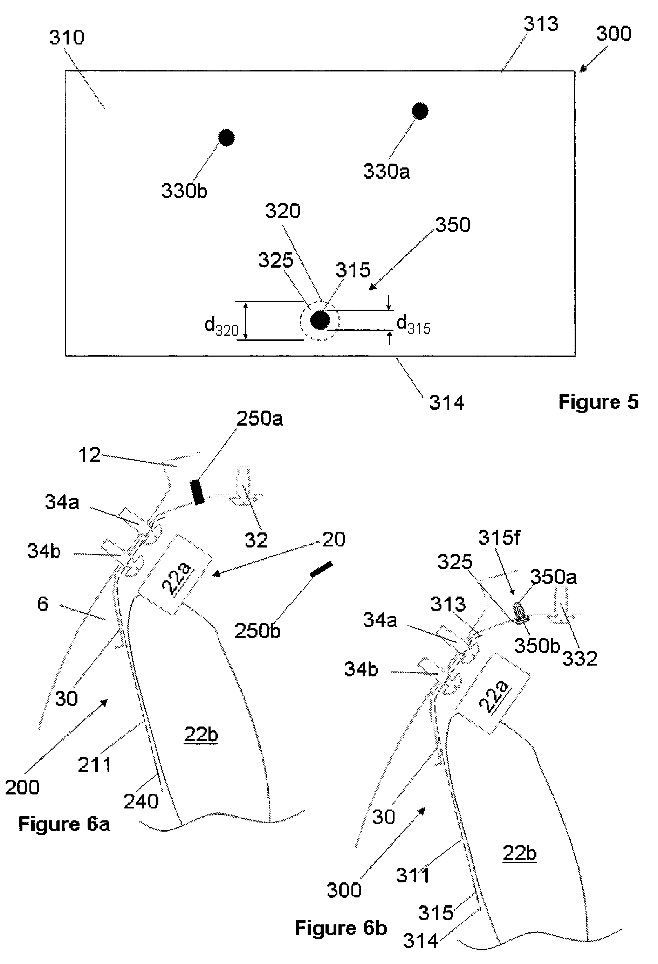

Upon deployment, the edge of the flexible deployment aid 200 adjacent to the friction clip 250 is released when the friction clip 250 is loaded by the deploying curtain airbag 200. The reliable release of the flexible deployment aid 200 is critical to ensure repeatable deployment characteristics of the curtain airbag. One method of improving the reliability of the release of the deployment aid 200 by the friction clip 250 is to use a friction clip with a frangible head. Use of such a frangible clip 250a, 250b is shown in Figure 6a.

The performance of the frangible clip is critical to the correct deployment of the curtain airbag. If the frangible clip is not used or is installed incorrectly then the wrap may not release correctly, adversely affecting the deployment characteristics of the curtain. It is conceivable that for some vehicles, there may only be a requirement for two such frangible fasteners in the entire vehicle, one for the curtain airbag on the left side and one for the right. In this case, these highly critical components are only used in relatively small volumes, increasing the cost of each part. In addition to the cost implications, the frangible clip must be designed to be clearly distinguishable from other fasteners of a similar size so that they are not inadvertently used where a non-frangible fastener is required or vice-versa.

The present invention has been conceived to address the critical nature of the performance of either the frangible clip or expanding friction clip 250 used with this known flexible deployment aid 200.

The present invention provides an improvement over the function of the known wrap by negating the need for a specialised frangible fastener or clip, so reducing cost and mitigating the possibility of inadvertent misassembly.

A wrap incorporating an apparatus providing releasable securing means of the present invention is shown in Figure 5. It will be noted that like-features have been given similar reference numerals for clarity.

Figure 5 shows an example of a flexible deployment aid 300 incorporating an apparatus of the present invention. The present invention does not require any change to the assembly procedure described for the known flexible deployment aid 200. In addition, the incorporation of the present invention allows the deployment aid 200 to guide the deploying airbag in substantially the same way as previously described for the flexible deployment aid 200 above.

Figure 5 shows a plan view of an airbag wrap 300 incorporating an apparatus providing releasable securing means according to the present invention. The wrap 300 is formed from a sheet 310 of flexible material such as extruded plastic sheet or woven nylon or polyester. Alternatively the sheet may be formed from a fibre-reinforced paper.

The wrap 300 is provided with mounting means in the form of first fixation holes 330a, 330b arranged to hold a fixed end or fixed edge 313 of the wrap 300 securely to the vehicle and/or the airbag by means of retaining bolts 34a, 34b.

Distal from the fixed edge 313 is a release edge 314. A second fixation hole or main aperture 315 is located adjacent to the release edge 314. The release hole 315 is arranged to cooperate with a fastener 315f (shown in Figure 6b) to provide the wrap 300 with a means for releasing the airbag during deployment.

The wrap 300 is provided with releasable securing means indicated generally at 350. The releasable securing means 350 comprise a locally weakened region 325 and main aperture 315 which together provide the function of the second fixation hole 240 of the flexible deployment aid 200 of Figure 1. The releasable securing means 350 provides a means to secure the release edge 314 around the stowed airbag and release the release edge 314 from the vehicle and/or airbag during airbag deployment.

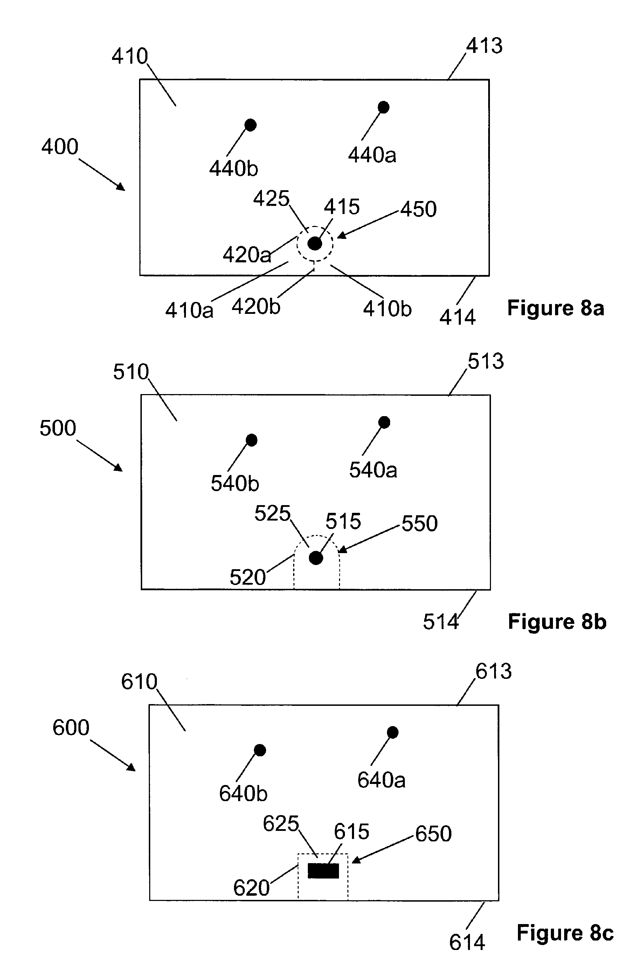

The main aperture 315 is arranged within the locally weakened zone 325 to provide the releasable securing means 350. In the example shown in Figure 5, the locally weakened zone 325 is bounded by a plurality of perforations 320. These perforations may either penetrate fully or partially through the sheet 310. In the example shown in Figure 5, both the main aperture 315 and the locally weakened zone 325 are generally circular, with the diameter of the main aperture 315 indicated as d₃₁₅ and the diameter of the locally weakened zone 325 indicated as d₃₂₀. Alternative examples of the releasable securing means and associated locally weakened zones of the present invention are shown in Figures 8a through 8c.

It will be appreciated by one skilled in the art that a locally weakened zone 325 may be produced in the vicinity of the main aperture 315 using techniques other than perforating the sheet 310. For example, the wrap 300 may be produced with a region of reduced material thickness. Alternatively, if the sheet 310 is formed from a woven material, the thread-count or the Denier of the threads used in the weave around the main aperture 315 may be adjusted to reduce the material strength locally.

Figure 6a shows a detailed section through the vehicle curtain airbag installation of Figure 2 with the curtain airbag assembly (indicated generally at 20) during or just after curtain airbag deployment. The curtain airbag assembly 20 comprises a static portion 22a and a dynamic portion in the form of a deployed airbag 22b.

Figure 6a shows the roof-mounted deployment ramp 30, mounted to a cant rail 12 via retaining bolts 34a and 34b and to the vehicle roof by location bolt 32. The deployment ramp 30 is fitted to the cant rail 12 before the curtain airbag is mounted to the vehicle. In this way, the surface of the ramp 30 can guide the deploying airbag over the ramp 30 and over any obstruction that may lie below the ramp 30.

In Figure 6a, the flexible deployment aid 200 was loaded by the deploying airbag causing am expanding friction clip or frangible fastener to yield and release the flexible deployment aid 200 as intended. Figure 6a shows an example of the known flexible deployment aid 200 using a frangible clip 250a, 250b, configured to release the wrap 200 by yielding at a pre-determined load. The flexible deployment aid 200 may alternatively be secured using an expanding friction clip (as shown in Figure 2d). In the case of the expanding friction clip 250 in Figure 2d, the clip 250 is arranged to be pulled from its corresponding securing hole or aperture, thus releasing the wrap 200 from around the airbag 200 during deployment.

During initial assembly, the frangible fastener 250a, 250b is inserted through the second fixation hole 240 and into a corresponding aperture in the deployment ramp 30. Once the frangible fastener 250a, 250b has yielded under the loading from the deploying airbag, the fastener is separated into two constituent parts, a head 250b and a tail section or shaft 250a. The head 250b of the frangible fastener has a larger cross-section than that of the shaft 250a. In addition, the shaft 250a is further provided with a narrowed neck-feature (not shown) positioned at the intersection between the head 250b and the shaft 250a. This neck-feature is arranged to act as a locally weakened portion configured to ensure that the shaft 250a of the fastener will fail and separate in a prescribed manner once a pre-determined axial and/or shear load is exceeded.

After deployment, the shaft 250a remains inserted in the corresponding aperture in the deployment ramp 30 and the head 250b separates from the shaft 250a as shown in Figure 6a.

In the example shown, the dynamic portion of curtain airbag 22b has inflated and in the process of inflation has forced the frangible fastener 250a, 250b to release the wrap 200 indicated by the dashed line 211. The final position of the second fixation hole 240 after the wrap 200 has released the airbag is indicated in the Figure.

Figure 6b shows the wrap 300 with releasable securing means according to the present invention after the curtain airbag has deployed. The wrap 300 is secured along edge 313 by being placed between the static portion 22a of the curtain airbag assembly 20 and the deployment ramp 30 and secured to the vehicle via retaining bolts 34a, 34b. Figure 6b shows the curtain airbag in the deployed condition as in Figure 6a. The final position and orientation of the wrap 300 once the airbag has deployed is indicated by dashed line 311. The final position of the main aperture is indicated as 315.

Figure 6b clearly shows that a portion of the locally weakened region 325 has been left attached to the vehicle by fastener 315f. The fastener 315f is a non-frangible fastener comprising a shaft 350a and a head 350b. Shaft 15a is arranged for insertion into a corresponding mounting aperture formed in the vehicle, the ramp 30 or the airbag assembly 20. Head 350b is arranged to trap at least a portion of the locally weakened zone 325 of the wrap 300 under the head 350b in use. The perimeter of the head 350b concentrates load exerted by the deploying airbag into the locally weakened zone 325 initiating a tear in the sheet 310. A portion of the locally weakened zone 325 is then torn or peeled away from the wrap 300 to allow the release edge 314 to move and release the airbag correctly.

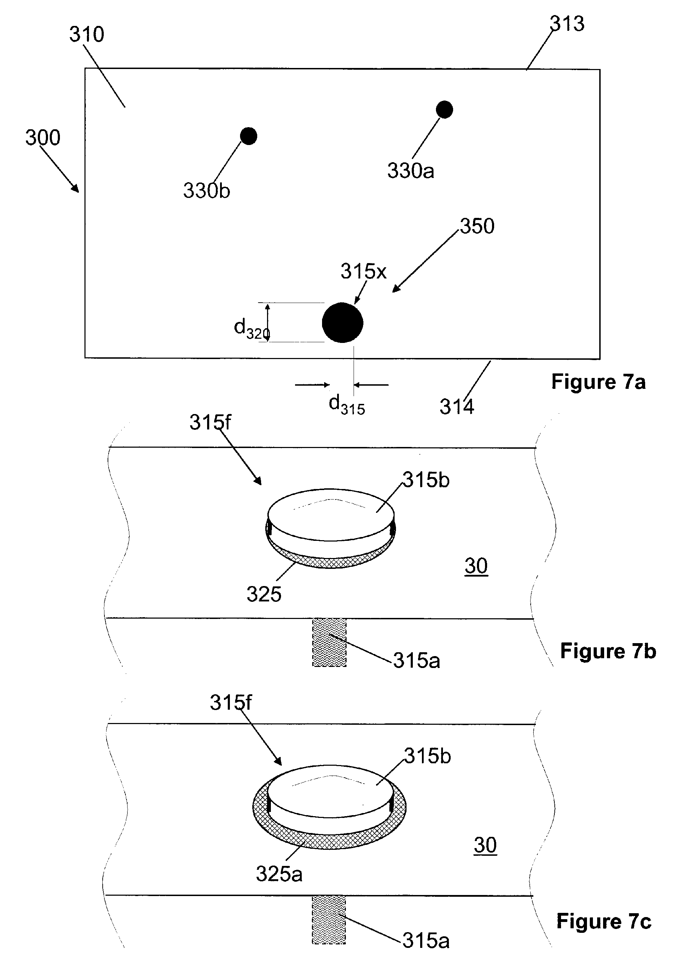

Figure 7a shows the wrap 300 in isolation after the curtain airbag has deployed. First fixation holes 330a, 330b are in the same condition as when the wrap 300 was first installed to the vehicle. The main aperture 315 has become enlarged as a portion of the locally weakened zone 325 was torn away from the sheet 310 of the wrap 300 in the vicinity of the main aperture 315 during deployment. This enlarged main aperture is indicated generally at 315x. It may be seen from the Figure that the diameter of the main aperture has increased from d₃₁₅ before deployment to approximately d₃₂₀, corresponding approximately to the original dimension of the locally weakened zone 325 in contact with the head 350b of the fastener 315f.

Figure 7b shows the fastener 315f secured to the deployment ramp 30 after the deployment of the airbag. The shaft 315a of the fastener 315f is still secured in the corresponding mounting hole in the deployment ramp 30. A portion of the locally weakened zone 325 is shown still pinned between the deployment ramp 30 and the head 350b of the fastener 315f as it would have been prior to airbag deployment. In the example shown in Figure 7b, the portion of the locally weakened zone 325 has an area corresponding approximately to that of the contact area between the head 350b of the fastener 315f and the wrap 300. In this case, the edge of the periphery of the head 350b locally concentrates the load from the deploying airbag into the locally weakened zone 325, initiating the tear and thus initiating the release of the wrap 300 from around the airbag assembly 20.

Figure 7c shows an example where the portion of the locally weakened zone 325 left trapped by the head 350b of the fastener 315f is greater than the diameter of the head 350b. In this case, the load necessary to initiate the tear in the locally weakened zone has been configured or tuned to fulfil specific criteria. Tuning is achieved by varying the length, pitch and diameter of the perforations 320 around the main aperture 315. Further examples of locally weakened zones whose tear initiation characteristics have been tuned in this manner are shown in Figures 8a through 8c.

Figure 8a shows an example of a wrap 400 comprising a sheet of flexible material 410 with releasable deployment means of the present invention, indicated generally at 450. In this example, perforations 420a, 420b surround a main aperture 415 and extend in a line towards the release edge 414. A series of perforations 420a are arranged to define an area around the head of a fastener inserted into the main aperture 415 in use. The area bordered by the perforations 420a forms a locally weakened zone 425 in the wrap 400 that is arranged to be in contact with the head of the fastener in use. However, in order to adjust the tear initiation characteristics, the perforations extend along a generally perpendicular line 420b from the release edge 414 towards the centre of the main aperture 415.

On deployment of the airbag, a tear is initiated around the locally weakened zone 425 along the perforations 420a. A tear initiates around the head of the fastener and propagates around the line of perforations 420a. These tears in the sheet 410, at either side of the main aperture 415, forms flaps 410a, 410b. As the wrap 400 is loaded by the deploying airbag, the fastener applies a concentrated load into the adjacent material of the sheet 410, between the intersection of perforations 420a and 420b. This concentrated load, which is in the direction of the line of perforations 420b, causes the tear to propagate around perforations 420a and along the line of perforations 420b. The tearing causes the two flaps 410a and 410b to part, and allow the release of the fastener from the wrap 410.

Figure 7b shows another example where a wrap 500 comprising a sheet 510 of flexible material provided with releasable securing means according to the present invention, indicated generally at 550. The releasable securing means 550 has a locally weakened zone 525 bounded by perforations 520 extending to a release edge 514. A main aperture 515 is located within the locally weakened zone 525 which is bounded by perforations 520 forming a generally 'U' shaped line of perforations around the main aperture 515. The locally weakened zone 525 is arranged to be at least as large as the contact area between the wrap 500 and the head of the fastener. This ensures that the head of the fastener does not trap a portion of the wrap 500 that is not configured to tear which may adversely affect the release characteristics of the wrap 500.

Figure 8c shows a further example of a wrap 600, comprising a sheet of flexible material 610 provided with releasable securing means according to the present invention, shown generally at 650. In this example, the releasable securing means 650 is generally rectangular in shape. A main aperture 615 is surrounded by a locally weakened zone 625 extending to a release edge 614 of the wrap 600 via a line of perforations 620. In this example, the main aperture 615 and the locally weakened zone 625 have been configured to work with a generally rectangular section clip (not shown). In certain vehicle applications, depending on the orientation of the mounting holes used to secure the wrap 600 to the vehicle or airbag, a rectangular clip or fastener may advantageously be used to reduce the time or load needed to initiate the tear. This effect is due to the concentration of stress that occurs in the sheet 610 adjacent to the corners of the fastener, especially those corners distal from the release edge 614.

In another example (not shown), the locally weakened zone is provided with a plurality of perforations, arranged concentrically around the centre of the hole to form a series of substantially concentric rings of perforations in increasing diameter from the centre of the main aperture to a diameter arranged to be equal to or larger than that of the head of the fastener.

It is envisaged that the releasable securing means of the present invention may be used in conjunction with a threaded fastener and is not limited to use with a barbed or bayonet-type clip. In the case of a threaded fastener, the shaft of the fastener is provided with a shoulder arranged to prevent the clamping face of the fastener from gripping the wrap too tightly. Such a condition may result in the tearing of the perforations before airbag deployment, which may lead to undesirable variation in deployment characteristics.

It is also envisaged that the perforations are formed when the hole is punched-out from the wrap material using a 'kiss-cut' or similar tool. Alternatively the perforations may be formed by a surface feature of the fastener itself, or may be formed during the weaving process used to create the wrap material.

In another example (not shown), the main aperture in the locally weakened zone is bordered by two substantially parallel lines of perforations extending substantially perpendicular to the release edge of the wrap. In this example, the perforations define a path through which the shaft of the fastener may pass during airbag deployment. In this example, the head of the fastener may still contact the unperforated material of the wrap, but rather than gripping the wrap securely against the airbag or vehicle, this contact is carefully controlled. In this way, the contact between the head and the wrap is configured so as to allow the sheet to pass between the head and the vehicle or airbag during deployment. This contact between the head and the wrap may be used to guide the wrap as the shaft of the fastener is initiated the tear through the wrap along the perforations during deployment.

It will be appreciated by one skilled in the art, that a wrap or flexible deployment aid provided with the releasable securing means of the present invention, offers greater flexibility in tuning the deployment characteristics and minimises the risk of inadvertent misassembly associated with using specialist frangible fasteners.

The wrap or flexible deployment aid provided with the releasable securing means of the present invention still offers the same advantages presented by the flexible deployment aid described in co-pending application GB 0813894.3. These advantages are primarily the improved flexibility in positioning of the flexible deployment aid relative to the airbag and vehicle over known airbag wraps and the option for the assembly operator to visually inspect the airbag during assembly to the vehicle.

The wrap or flexible deployment aid provided with the releasable securing means of the present invention may be tuned to perform in the same way as a wrap or flexible deployment aid using a frangible fastener an so lends itself to adoption onto existing products as a rolling change.

The wrap or flexible deployment aid provided with the releasable securing means of the present invention may also be delivered to the vehicle assembly line with fastener pre-assembled into the main aperture to assist the assembly operator. The releasable securing means of the present invention, provided by the main aperture 315 surrounded at least in part by the locally weakened region 325, allows for the use of a wise variety of fasteners to secure the release edge 314 of the wrap 300. Both frangible and non-frangible fasteners may be used with the releasable securing means of the present invention. Advantageously, a simple expanding friction clip is both cost effective and does not require the assembly operator to use additional tools to secure the release edge 314 during assembly.

Other advantage will be apparent to one skilled in the art and the present examples and embodiments are to be considered illustrative and not restrictive. The invention is not to be limited to the details given herein, but may be modified within the scope and equivalence of the appended claims.

## Claims

1. An apparatus for facilitating deployment of a vehicle airbag (220), the apparatus comprising:
a sheet (310) of flexible material arranged, in use, to be secured to the vehicle by means of at least one fastener (34a, 34b) so as to at least partially surround the airbag (220),
wherein the sheet (310) comprises a locally weakened region (325) and a main aperture (315), said main aperture (315) is adapted to co-operate with at least one fastener (315f) for securing the sheet (310) to a deployment ramp (30), in use,
**characterised in that**:
the main aperture (315) is located at least partly within the locally weakened region (325) and wherein the locally weakened region (325) is arranged to tear around the fastener (315f) for securing the sheet (310) to a deployment ramp (30) thereby to release at least part of the sheet from the vehicle upon deployment of the airbag (220).

2. An apparatus according to claim 1, wherein the locally weakened region (325) comprises a plurality of perforations (320) formed through the sheet (310) and arranged to at least partly surround the main aperture (315).

3. An apparatus according to claim 1, wherein the locally weakened region (325) comprises an area of reduced material thickness of the sheet (310) and arranged to at least partly surround the main aperture (315).

4. An apparatus according to any of the preceding claims, wherein the locally weakened region (325) is formed by chemically etching or eroding the surface of the sheet (310) in the vicinity of the main aperture (315).

5. An apparatus according to any preceding claim, wherein the fastener (315f) comprises an elongate shaft and a head, wherein
the elongate shaft is arranged for insertion into the main aperture (315) and is terminated at one end by the head with is larger in cross-section than the shaft and is arranged to secure at least a portion of the sheet to the vehicle or the airbag (220) in use.

6. An apparatus according to claim 5, wherein the shaft of the fastener (315) further comprises at least one barb arranged to secure the fastener to the vehicle or the airbag (220) in use.

7. An apparatus according to claim 5, wherein the shaft of the fastener (315f) is at least partly threaded and arranged to cooperate with a threaded aperture in the vehicle or the airbag (220) so as to secure the fastener thereto use.

8. An apparatus according to claim 5, wherein the shaft of the fastener (315f) is configured to form a bayonet-type fastener arranged to cooperate with a correspondingly formed aperture in the vehicle or the airbag (220) so as to secure the fastener (315f) thereto use.

9. An apparatus according to any of the preceding claims wherein the fastener (315f) is arranged to remain secured and intact during deployment of the airbag (220) and subsequent release of the sheet.

10. An apparatus according to any of the preceding claims when dependant on Claim 2, wherein the perforations (320) are arranged in a locus prescribed by the perimeter of the part of the head in contact with the sheet (310) and
the part of the head in contact with the sheet is arranged to concentrate load from the airbag (220) into the area of the sheet (310) between the perforations (320) during airbag (220) deployment to initiate and manage the tear of the sheet.

11. An airbag (220) comprising an apparatus according to any preceding claim.

12. A vehicle airbag deployment guide such as a ramp or reaction surface comprising an apparatus according to any preceding claim.

13. A vehicle comprising an apparatus according to any preceding claim.

14. A method of assembling a deployment aid for a vehicle-mounted curtain airbag (220) to the vehicle, the method comprising:
attaching a sheet (310) of flexible material to a vehicle body adjacent to the vehicle roof via a first retainer (34a, 34b);
attaching the curtain airbag assembly to the vehicle body adjacent to the vehicle roof;
wrapping the sheet of flexible material around at least part of the curtain airbag and;
securing the sheet of flexible material around the curtain airbag (220) to the vehicle body via a second retainer (315f) in co-operation with a main aperture located at least partly in a locally weakened region (325) in the sheet of flexible material.

## Patentansprüche

1. Vorrichtung zum Erleichtern des Entfaltens eines Fahrzeug-Airbags (220), wobei die Vorrichtung Folgendes umfasst:
eine Bahn (310) flexiblen Materials, das in Gebrauch dafür angeordnet ist, mittels mindestens eines Befestigungsmittels (34a, 34b) derart am Fahrzeug befestigt zu sein, dass es den Airbag (220) zumindest teilweise umgibt,
wobei die Bahn (310) einen örtlich geschwächten Bereich (325) und eine Hauptöffnung (315) umfasst, wobei die Hauptöffnung (315) dafür eingerichtet ist, in Gebrauch mit mindestens einem Befestigungsmittel (315f) zusammenzuwirken, um die Bahn (310) an einer Entfaltungsrampe (30) zu befestigen,
**dadurch gekennzeichnet, dass**:
die Hauptöffnung (315) zumindest teilweise im örtlich geschwächten Bereich (325) angeordnet ist, wobei der örtlich geschwächte Bereich (325) derart angeordnet ist, dass er um das Befestigungsmittel (315f) zum Befestigen der Bahn (310) an einer Entfaltungsrampe (30) herum reißt und dadurch bei der Entfaltung des Airbags (220) mindestens einen Teil der Bahn vom Fahrzeug löst.

2. Vorrichtung nach Anspruch 1, wobei der örtlich geschwächte Bereich (325) mehrere Perforationen (320) umfasst, die durch die Bahn (310) gebildet und dafür angeordnet sind, die Hauptöffnung (315) zumindest teilweise zu umgeben.

3. Vorrichtung nach Anspruch 1, wobei der örtlich geschwächte Bereich (325) einen Bereich verringerter Materialdicke der Bahn (310) umfasst, der dafür angeordnet ist, die Hauptöffnung (315) zumindest teilweise zu umgeben.

4. Vorrichtung nach einem der vorhergehenden Ansprüche, wobei der örtlich geschwächte Bereich (325) durch chemisches Ätzen oder Erodieren der Oberfläche der Bahn (310) in der Nähe der Hauptöffnung (315) gebildet ist.

5. Vorrichtung nach einem der vorhergehenden Ansprüche, wobei das Befestigungsmittel (315f) einen länglichen Schaft und einen Kopf umfasst, wobei
der längliche Schaft zum Einführen in die Hauptöffnung (315) angeordnet ist und an einem Ende in dem Kopf endet, der im Querschnitt größer als der Schaft ist, und dafür angeordnet ist, in Gebrauch mindestens einen Abschnitt der Bahn am Fahrzeug oder dem Airbag (220) zu befestigen.

6. Vorrichtung nach Anspruch 5, wobei der Schaft des Befestigungsmittels (315) ferner mindestens einen Widerhaken umfasst, die dafür angeordnet ist, in Gebrauch das Befestigungsmittel am Fahrzeug oder am Airbag (220) zu befestigen.

7. Vorrichtung nach Anspruch 5, wobei der Schaft des Befestigungsmittels (315f) zumindest teilweise mit Gewinde versehen und dafür angeordnet ist, derart mit einer mit Gewinde versehenen Öffnung im Fahrzeug oder Airbag (220) zusammenzuwirken, dass das Befestigungsmittel in Gebrauch daran befestigt ist.

8. Vorrichtung nach Anspruch 5, wobei der Schaft des Befestigungsmittels (315f) dafür gestaltet ist, ein Bajonettverschluss-Befestigungsmittel zu bilden, das dafür angeordnet ist, derart mit einer entsprechend gebildeten Öffnung im Fahrzeug oder Airbag (220) zusammenzuwirken, dass das Befestigungsmittel (315f) in Gebrauch daran befestigt ist.

9. Vorrichtung nach einem der vorhergehenden Ansprüche, wobei das Befestigungsmittel (315f) dafür angeordnet ist, während der Entfaltung des Airbags (220) und des nachfolgenden Lösens der Bahn befestigt und intakt zu bleiben.

10. Vorrichtung nach einem der vorhergehenden Ansprüche, wenn abhängig von Anspruch 2, wobei die Perforationen (320) in einer Ortslinie angeordnet sind, die durch den Außenumfang des Teils des Kopfes bestimmt ist, der in Kontakt mit der Bahn (310) steht, und
der Teil des Kopfes, der in Kontakt mit der Bahn steht, dafür angeordnet ist, während der Entfaltung des Airbags (220) Lasten vom Airbag (220) im Bereich der Bahn (310) zwischen den Perforationen (320) zu konzentrieren, um das Reißen der Bahn auszulösen und zu steuern.

11. Airbag (220), eine Vorrichtung nach einem der vorhergehenden Ansprüche umfassend.

12. Fahrzeug-Airbagentfaltungsführung, wie beispielsweise eine Rampe oder Reaktionsfläche, eine Vorrichtung nach einem der vorhergehenden Ansprüche umfassend.

13. Fahrzeug, eine Vorrichtung nach einem der vorhergehenden Ansprüche umfassend.

14. Verfahren zum Montieren einer Entfaltungshilfe für einen in ein Fahrzeug montierten Vorhangairbag (220) im Fahrzeug, wobei das Verfahren Folgendes umfasst:
Anbringen einer Bahn (310) flexiblen Materials an eine Fahrzeugkarosserie mittels einer ersten Halterung (34a, 34b), angrenzend an das Fahrzeugdach,
Anbringen der Vorhangairbaganordnung an der Fahrzeugkarosserie angrenzend an das Fahrzeugdach,
Wickeln der Bahn flexiblen Materials um mindestens einen Teil des Vorhangairbags und
Befestigen der Bahn flexiblen Materials an der Fahrzeugkarosserie um den Vorhangairbag (220) herum mittels einer zweiten Halterung (315f) in Zusammenwirkung mit einer Hauptöffnung, die zumindest teilweise in einem örtlich geschwächten Bereich (325) der Bahn flexiblen Materials angeordnet ist.

## Revendications

1. Appareil permettant de faciliter le déploiement d'un coussin gonflable de véhicule (220), l'appareil comprenant :
une feuille (310) de matériau flexible agencée, en utilisation, pour être arrimée au véhicule au moyen d'au moins une attache (34a, 34b) de façon à entourer au moins partiellement le coussin gonflable (220),
dans lequel la feuille (310) comprend une région localement fragilisée (325) et une ouverture principale (315), ladite ouverture principale (315) étant adaptée pour coopérer avec au moins une attache (315f) permettant d'arrimer la feuille (310) à une rampe de déploiement (30), en utilisation,
**caractérisé en ce que**
l'ouverture principale (315) est située au moins en partie au sein de la région localement fragilisée (325) et dans lequel la région localement fragilisée (325) est agencée pour se déchirer autour de l'attache (315f) permettant d'arrimer la feuille (310) à une rampe de déploiement (30) afin de libérer ainsi au moins une partie de la feuille du véhicule lors du déploiement du coussin gonflable (220).

2. Appareil selon la revendication 1, dans lequel la région localement fragilisée (325) comprend une pluralité de perforations (320) formée à travers la feuille (310) et agencée de façon à entourer au moins en partie l'ouverture principale (315).

3. Appareil selon la revendication 1, dans lequel la région localement fragilisée (325) comprend une aire d'épaisseur de matériau réduite de la feuille (310) et agencée pour entourer au moins en partie l'ouverture principale (315).

4. Appareil selon l'une quelconque des revendications précédentes, dans lequel la région localement fragilisée (325) est formée en gravant ou en érodant chimiquement la surface de la feuille (310) à proximité de l'ouverture principale (315).

5. Appareil selon l'une quelconque des revendications précédentes, dans lequel l'attache (315f) comprend un arbre allongé et une tête, dans lequel
l'arbre allongé est agencé pour une insertion dans l'ouverture principale (315) et se termine à une extrémité par la tête qui est de section plus grande que l'arbre et est agencé pour fixer au moins une portion de la feuille au véhicule ou au coussin gonflable (220) en utilisation.

6. Appareil selon la revendication 5, dans lequel l'arbre de l'attache (315) comprend en outre au moins un ardillon agencé pour arrimer l'attache au véhicule ou au coussin gonflable (220) en utilisation.

7. Appareil selon la revendication 5, dans lequel l'arbre de l'attache (315f) est au moins en partie fileté et agencé pour coopérer avec une ouverture filetée dans le véhicule ou le coussin gonflable (220) de façon à y arrimer l'attache en utilisation.

8. Appareil selon la revendication 5, dans lequel l'arbre de l'attache (315f) est configuré pour former une attache de type à baïonnette agencée pour coopérer avec une ouverture de forme correspondante dans le véhicule ou le coussin gonflable (200) de façon à y arrimer l'attache (315f) en utilisation.

9. Appareil selon l'une quelconque des revendications précédentes, dans lequel l'attache (315f) est agencée pour rester arrimée et intacte pendant le déploiement du coussin gonflable (220) et la libération ultérieure de la feuille.

10. Appareil selon l'une quelconque des revendications précédentes lorsqu'elles dépendent de la revendication 2, dans lequel les perforations (320) sont agencées en un lieu prescrit par le périmètre de la partie de la tête en contact avec la feuille (310) et
la partie de la tête en contact avec la feuille est agencée pour concentrer une charge provenant du coussin gonflable (220) dans l'aire de la feuille (310) entre les perforations (320) pendant le déploiement du coussin gonflable (220) afin d'amorcer et gérer la déchirure de la feuille.

11. Coussin gonflable (220) comprenant un appareil selon l'une quelconque des revendications précédentes.

12. Guide de déploiement de coussin gonflable de véhicule tel qu'une rampe ou une surface de réaction comprenant un appareil selon l'une quelconque des revendications précédentes.

13. Véhicule comprenant un appareil selon l'une quelconque des revendications précédentes.

14. Procédé d'assemblage d'une aide au déploiement pour un rideau gonflable monté sur véhicule (220) au véhicule, le procédé comprenant :
la fixation d'une feuille (310) de matériau flexible à une carrosserie de véhicule adjacente au toit du véhicule via un premier dispositif de retenue (34a, 34b) ;
la fixation de l'ensemble de rideau gonflable à la carrosserie de véhicule adjacente au toit de véhicule ;
l'enveloppement de la feuille de matériau flexible autour d'au moins une partie du rideau gonflable ; et
l'arrimage de la feuille de matériau flexible autour du rideau gonflable (220) à la carrosserie de véhicule via un second dispositif de retenue (315f) en coopération avec une ouverture principale située au moins en partie dans une région localement fragilisée (325) dans la feuille de matériau flexible.
